# NOUVEAU FASCICULE DE BREVET EUROPEEN

(11) **EP 1 038 921 B2**
(45) Date de publication et mention de la décision concernant l'opposition: **25.01.2012**
(45) Mention de la délivrance du brevet: 10.05.2006
(21) Numéro de dépôt: 00400695.3
(22) Date de dépôt: 14.03.2000
(51) Int. Cl.: C08L 77/00, C08L 77/02

(54) **Compositions thermoplastiques à base de polyamide**
Thermoplastische Zusammensetzungen auf Basis von Polyamid
Thermoplastic compositions based on polyamide

(30) Priorité: 26.03.1999 FR 9903814
(43) Date de publication de la demande: 27.09.2000
(73) Titulaire: ARKEMA FRANCE, 92700 Colombes (FR)
(72) Inventeur: Montanari, Thibaut, 27300 Bernay (FR); Durand, Jean-Marc, 75009 Paris (FR)
(74) Mandataire: Dossmann, Gérard

(56) Documents cités:
- EP-A- 0 302 483
- EP-A- 0 457 198
- EP-A- 0 748 847
- EP-A1- 0 388 583
- WO-A-94/25530
- WO-A1-97/46619
- DE-A1- 2 152 194
- US-A- 5 414 051
- US-A- 5 416 172
- 'Encyclopedia of Chemical Technol', vol. 19, 1996, ISBN 0-471-52688-6 pages 500 - 501
- 'Ullmann's Encyclopedia of Industrial Chemistry', 1992 page 193

## Description

La présente invention concerne des compositions thermoplastiques à base de polyamide et plus particulièrement des compositions thermoplastiques comprenant en poids:
50 à 99 % d'un polyamide (A1),
1 à 50 % d'un polyamide (A2) contenant un catalyseur de polycondensation étant de l'acide phosphorique,
0 à 40% d'un plastifiant,
0 à 60%, préférentiellement 0 à 30 % d'un modifiant souple,
le total étant 100 %, la quantité de catalyseur étant comprise entre 5 et 15000 ppm d'acide phosphorique par rapport à la résine (A2), et comprenant un plastifiant et un modifiant souple.
Ces compositions sont utiles pour fabriquer par exemple des tuyaux flexibles.

Les polyamides doivent être modifiés par incorporation de caoutchoucs ou d'autres polymères par exemple pour en modifier le module de flexion ou améliorer la résistance au choc.

US 5 070 145 décrit des compositions constituées de 80 parties de polyamide 6 ou polyamide 6-6 dans lesquelles on a dispersé 20 parties d'un mélange (i) d'un copolymère de l'éthylène et d'un acrylate d'éthyle ou de butyle et (ii) d'un copolymère de l'éthylène, de l'acrylate d'éthyle et de l'anhydride maléique. Ces compositions présentent une bonne résistance au choc.

EP 284 379 décrit des compositions multiphases de polyamide et de copolymère d'éthylène se présentant sous la forme d'une matrice de polyamide dans laquelle sont dispersés des nodules (1) d'un copolymère de l'éthylène, de l'acrylate d'éthyle et de l'anhydride maléique, dans ces nodules (1) sont dispersés des nodules de polyamides. On commence par préparer ces nodules (1) en dispersant du polyamide dans le copolymère d'éthylène puis on réticule, ensuite on disperse ces nodules dans du polyamide. Ces compositions sont aussi présentées comme ayant une bonne résistance au choc.

Le brevet FR 2 719 849 décrit des compositions thermoplastiques consistant en une matrice d'un polymère thermoplastique dans laquelle sont dispersés des nodules d'un deuxième polymère thermoplastique partiellement ou totalement en capsulé par un copolymère d'éthylène. On prépare ces compositions en effectuant d'abord l'encapsulation du deuxième polymère, ensuite on ajoute l'autre polymère formant la matrice dans des conditions telles qu'on ne détruit pas les capsules. Cette préparation est effectuée en deux étapes complètement séparées ou l'une à la suite de l'autre dans la même extrudeuse. Ces compositions présentent à la fois une bonne souplesse et une bonne résistance au choc. Les exemples montrent des matrices de polyamide 6, polyamide 12 ou de PBT (poly butylène téréphtalate) dans lesquelles sont dispersés des nodules de polyamide 6-6 encapsulé par un copolymère d'éthylène, d'acrylate d'éthyle et de méthacrylate de glycidyle. Un exemple comparatif montre que dans une matrice de PA 6 les nodules de PA 6-6 en capsulés par le copolymère d'éthylène sont plus gros que les nodules formés seulement du copolymère d'éthylène.

La demande de brevet WO 97/46621 décrit des mélanges de polyamide se présentant sous forme de matrice dans laquelle sont dispersés des nodules en capsulés. Il est expliqué que si dans une matrice (M) contenant des nodules (S) on remplaçait une partie de (S) par un polymère (K) on pouvait améliorer la contrainte à la traction tout en conservant le module de flexion. De plus très souvent il en résulte aussi une réduction de la taille des nodules de la phase dispersée dans (M).

La publication de M. GENAS ("Rilsan PA11, synthèse et propriétés", Angew. Chemie 74(15) 535-540, année 1962) décrit l'utilisation de catalyseur acide phosphorique pour accélérer la polycondensation du PA.

De même les publications de M. K. DOBROKHOTOVA et al ("Synthèse du PA12", Plasticheskie Massy, 2, 23, année1979 ; ainsi que les publications ultérieures des mêmes auteurs) décrivent le rôle de l'acide phosphorique : catalyseur, limitateur de chaîne.

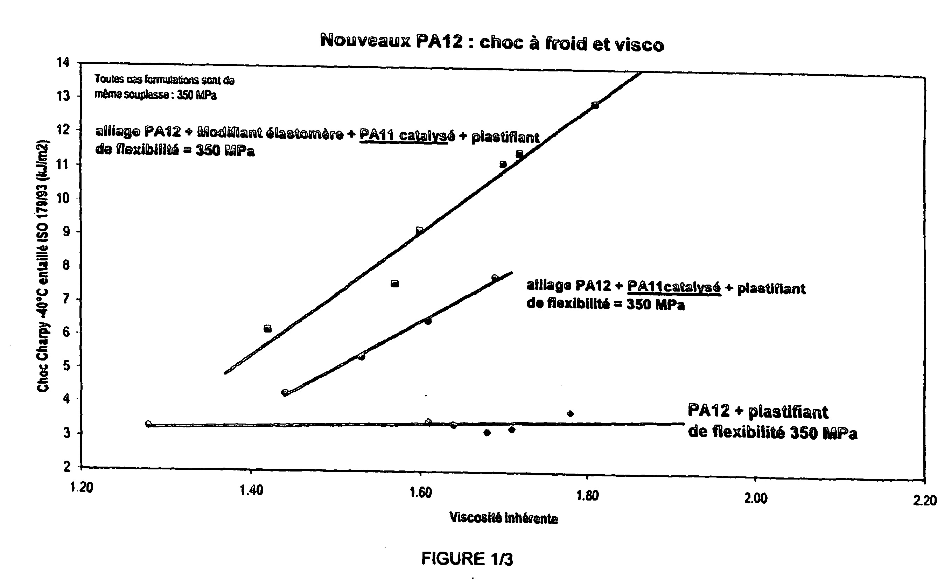

La demanderesse a maintenant trouvé que des compositions de polyamide contenant du polyamide catalysé selon l'invention présentaient l'avantage d'une résistance au choc Charpy entaillé à -40°C (ISO 179/93) qui augmentait avec la viscosité inhérente des compositions alors que des polyamides contenant des plastifiants et ne contenant pas de polyamide catalysé présentaient une résistance au choc constante (ou augmentant dans des proportions bien moindres) et peu élevée en fonction de la viscosité inhérente (voir tableaux 1-2 et figure 1).

Les compositions de l'invention sont fabriquées par mélange à l'état fondu des différents constituants (extrudeuses bivis, BUSS, monovis) selon les techniques habituelles des thermoplastiques. Les compositions peuvent être granulées en vue d'une utilisation ultérieure (il suffit de les refondre) ou bien de suite injectées dans un moule ou un dispositif d'extrusion ou de coextrusion pour fabriquer des tubes ou des profilés. La viscosité inhérente des compositions ainsi obtenues est plus élevée que celle des polyamides (A1) et (A2) de départ.

La viscosité inhérente (η) est mesurée par viscosimètre UBBELHODE à 25°C dans le metacresol pour 0,5 g de polymère dans 100 ml de metacresol. Ce principe est décrit dans ULLMANN'S Encyclopedia of Industrial Chemistry - Vol. A 20, p. 527 - 528 (1995 - 5e édition). Dans la suite du texte la viscosité inhérente désigne la viscosité inhérente normée à la quantité de polyamide c'est à dire que c'est la viscosité inhérente de la composition *100/(%A1+%A2). Il s'agit donc de ramener la valeur mesurée à la quantité de PA contenu dans la composition (A1 et/ou A2 pouvant être eux même des mélanges de polyamide qui sont solubles dans le métacrésol) et en décomptant les autres constituants (modifiant souple, plastifiant, stabilisants, charges...). Par exemple la viscosité inhérente d'une composition comprenant 70% de PA 12, 12% de PA 11 catalysé, 10% de modifiant EPRm, 8% de plastifiant est déterminée comme étant le ratio "viscosité mesurée" * 100% / (100% - 10% - 8%) ou encore le ratio "viscosité mesurée" * 100% / (70%+12%).

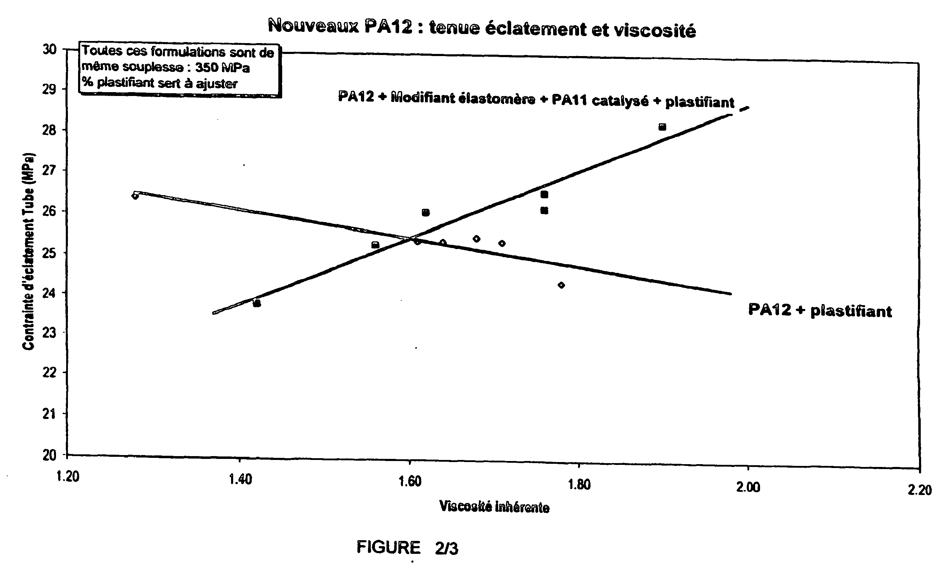

Un autre avantage des compositions de la présente invention est la contrainte d'éclatement des tubes fabriqués, cette contrainte augmente avec la viscosité inhérente des compositions alors que pour des polyamides ou des polyamides contenant seulement du plastifiant et pas de polyamide catalysé la pression d'éclatement diminue quand la viscosité inhérente augmente (voir tableaux 1-2 et figure 2).

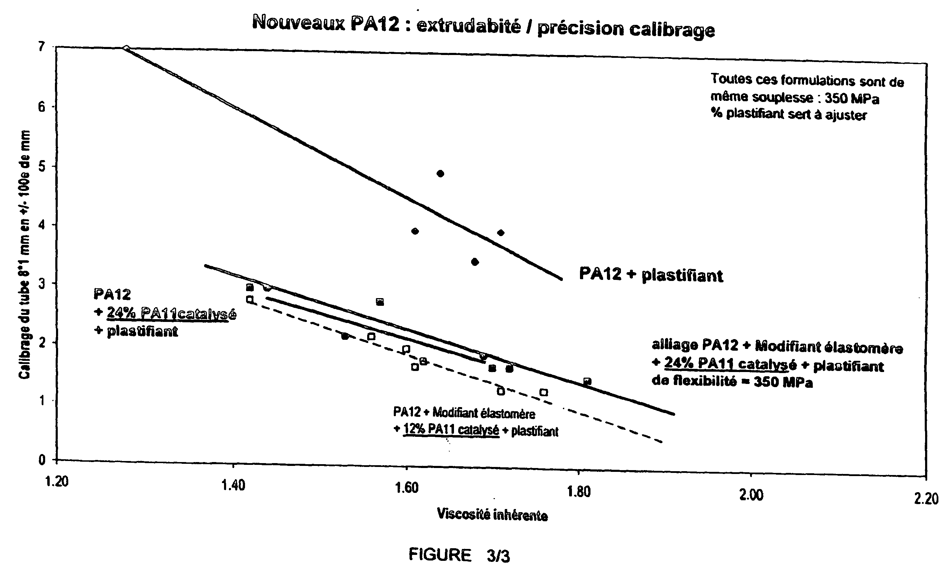

Un autre avantage des compositions de la présente invention est la précision du calibrage des tubes extrudés lors de leur mise en oeuvre. Par exemple s'agissant de tubes de 8 mm de diamètre extérieur et d'épaisseur 1 mm la précision est améliorée d'environ 3 centièmes de mm par comparaison avec des compositions contenant seulement du plastifiant et pas de polyamide catalysé (voir tableaux 1-2 et figure 3). Ce remarquable comportement permet d'augmenter la vitesse d'extrusion des tubes, donc la productivité, tout en conservant les mêmes spécifications de tolérance.

Un autre avantage des compositions de la présente invention est leur excellent "melt strength" ou tenue de la matière fondue. Elles sont donc particulièrement adaptées, non seulement à l'extrusion de tubes et profilés de tailles standards (exemple tube 8*1 mm ou 12*1.5 mm), mais aussi à l'extrusion de tubes de grand diamètre. Elles sont également bien adaptées à l'extrusion-soufflage de corps creux, même de grande taille. Ces compositions nous offrent donc un éventail élargi de possibilités de mise en oeuvre.

Un autre avantage des compositions de la présente invention est qu'on est moins confronté au problème d'exsudation, qui est le départ de plastifiant au cours du temps et d'autant plus que la température est élevée. Ces formulations contiennent en effet moins de plastifiant. On aura donc moins de problèmes d'aspects (dépôts), de variations dimensionnelles (dus à la perte de plastifiant qui peut atteindre 10 voire 30%) qui peuvent créer des problèmes de tenue aux raccord, de variations de propriétés mécaniques, physiques et chimiques. En deçà de 7-8% de plastifiant la Tg des polyamides 11 et 12 demeurent au dessus de la température ambiante. Du fait de la moindre mobilité moléculaire que cela engendre, les phénomènes de migration du plastifiant et des oligomères de polyamides (eux même favorisés par la présence de plastifiant) sont donc réduits. On y verra avantage par exemple dans le cas des applications véhiculant un fluide tel le carburant, où les oligomères emportés peuvent boucher des systèmes de filtration.

Un autre avantage des compositions de la présente invention est leur excellente résistance à l'abrasion.

Un autre avantage des compositions de la présente invention est leur meilleure résistance intrinsèque au vieillissement, notamment en température, que ce soit en présence d'air, d'eau, d'autres produits chimiques tels les carburants, les alcools et leurs mélanges (fluides de l'industrie automobile). Les résultats sont présentés dans le TABLEAU 3.

L'invention va maintenant être décrite en détails.

On entend par polyamide les produits de condensation :
- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylylènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;
- ou des mélanges de certains de ces monomères ce qui conduit à des copolyamides, par exemple le coPA 6/12 par condensation du caprolactame et du lauryllactame, par exemple le coPA 12/11 par condensation de lauryllactame et acide aminoundécanoïque.

On entend aussi par polyamide les copolymères à blocs polyamide et blocs polyéther et les mélanges de ces copolymères avec les polyamides précédents.

Les polymères à blocs polyamides et blocs polyéthers résultent de la copolycondensation de séquences polyamides à extrémités réactives avec des séquences polyéthers à extrémités réactives, telles que, entre autres :
1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha oméga dihydroxylées aliphatiques appelées polyétherdiols.
3) Séquences polyamides à bouts de chaînes dicarboxyliques avec des polyétherdiols, les produits obtenus étant, dans ce cas particulier, des polyétheresteramides.

Les séquences polyamides à bouts de chaînes dicarboxyliques proviennent, par exemple, de la condensation d'acides alpha oméga aminocarboxyliques de lactames ou de diacides carboxyliques et diamines en présence d'un diacide carboxylique limiteur de chaîne. Avantageusement, les blocs polyamides sont en polyamide-12.

La masse molaire en nombre des séquences polyamides est comprise entre 300 et 15 000 et de préférence entre 600 et 5 000. La masse des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité intrinsèque entre 0,8 et 2,5 mesurée dans le métacrésol à 25°C.

Que les blocs polyéthers dérivent du polyéthylène glycol du polyoxypropylène glycol ou du polyoxytétraméthylène glycol, ils sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441, US 4 864 014, US 4 230 838 et US 4 332 920.

Le polyéther peut être par exemple un polyéthylène glycol (PEG), un polypropylène glycol (PPG) ou un polytétra méthylène glycol (PTMG). Ce dernier est aussi appelé polytétrahydrofurane (PTHF).

Que les blocs polyéther soient introduits dans la chaîne du polymère à blocs polyamides et blocs polyéther sous forme de diols ou de diamines, on les appelle par simplification blocs PEG ou blocs PPG ou encore blocs PTMG.

On ne sortirait pas du cadre de l'invention si les blocs polyéther contenaient des motifs différents tels que des motifs dérivés de l'éthylène glycol, du propylène glycol ou encore du tétra méthylène glycol.

Avantageusement, le polymère à blocs polyamides et blocs polyéthers est tel que le polyamide est le constituant majoritaire en poids, c'est-à-dire que la quantité de polyamide qui est sous forme de blocs et celle qui est éventuellement répartie de façon statistique dans la chaîne représente 50% en poids ou plus du polymère à blocs polyamide et blocs polyéther. Avantageusement, la quantité de polyamide et la quantité de polyéther sont dans le rapport (polyamide / polyéther) 50/50 à 80/20.

De préférence, les blocs polyamides et les blocs polyéther d'un même polymère (B) ont respectivement des masses Mn 1000/1000, 1300/650, 2000/1000, 2600/650 et 4 000/1 000.

S'agissant du polyamide (A1) l'invention concerne plus particulièrement le polyamide 12 (polylauryllactame), le polyamide 6-12 (polyhexamethylène dodecaneamide) le polyamide 10-12 (polydecamethylene dodecaneamide), le polyamide 10-10 (polydecamethylene sebacamide), le copolyamide 12/11 (copolymère du lauryllactame et de l'acide aminoundecanoïque), le copolyamide 6/12 (copolymère du caprolactame et du lauryllactame). La viscosité inhérente du polyamide (A1) qu'on utilise pour préparer les compositions de l'invention peut être comprise entre 0.9 et 2.4

S'agissant du polyamide (A2) c'est un polyamide comme décrit plus haut mais contenant un catalyseur de polycondensation, qui est l'acide phosphorique. Le catalyseur peut être ajouté dans le polyamide (A2) après sa préparation par un procédé quelconque ou, tout simplement et c'est ce que l'on préfère, être le reste du catalyseur utilisé pour sa préparation. "Polyamide catalysé" veut dire que la chimie va se poursuivre au delà des étapes de synthèse de la résine de base et donc au cours des étapes ultérieures de la préparation des compositions de l'invention. Des réactions de polymérisation et/ou dépolymerisation pourront avoir très substantiellement lieu au cours du mélange des polyamides (A1) et (A2) pour préparer les compositions de la présente invention. Typiquement, la demanderesse pense (sans être lié par cette explication) que l'on continue à polymériser (allongement de chaîne) et à brancher les chaînes (par exemple pontage par le biais de l'acide phosphorique). De plus ceci peut être considéré comme une tendance au rééquilibrage de l'équilibre de polymérisation, donc une sorte d'homogénéisation. Il est cependant recommandé de bien sécher (et avantageusement de bien maîtriser les niveaux d'humidité) les polyamides pour éviter des depolymerisations. La quantité de catalyseur est comprise entre 5 ppm et 15000 ppmd'acide phosphorique par rapport la résine (A2).

On ne sortirait pas du cadre de l'invention si le polyamide A1 etait un mélange de plusieurs polyamides et/ou si le polyamide A2 etait aussi un mélange de plusieurs polyamides au moins l'un d'eux étant catalysé.

Pour obtenir des compositions ayant une viscosité inhérente déterminée l'homme de métier de la polycondensation et du compoundage peut choisir facilement les polyamides de départ. En règle générale la viscosité inhérente d'un mélange de polyamides est proportionnelle à la quantité de chaque polyamide et à leur viscosité inhérente. Dans le cas présent il faut tenir compte de la viscosité inhérente de départ de A2 et A1 , de la nature de A2 et A1 et de la quantité et de la nature du catalyseur. En relation avec la nature et la quantité du catalyseur, il est aussi nécessaire de tenir compte des conditions du mélange de A1 et A2 telles que la teneur en eau qui peut s'ajuster, soit au préalable (par exemple par séchage), soit en cours de fabrication par un ou plusieurs système de dégazage contrôlé du dispositif de mélange (par exemple un puits de dégazage sur une extrudeuse). Cette teneur en eau est un paramètre bien connu dans la préparation des polyamides et qui déplace l'équilibre vers la polymérisation quand la quantité d'eau diminue et vers la dépolymérisation quand la teneur en eau augmente. Les proportions de A1 et de A2 sont aussi choisies en fonctions des propriétés mécaniques demandées aux compositions de l'invention telles que par exemple le module de flexion.

L'invention est particulièrement utile pour des compositions ayant un module de flexion de l'ordre de 150 à 700 MPa mesuré selon la norme ISO 178. Les compositions de la présente invention comprennent un plastifiant et un modifiant souple.

A titre d'exemple de plastifiant on peut citer le butylbenzène sulfonamide (BBSA), l'éthylhexylpara-hydroxy benzoate (EHPB) et le décylhexylpara-hydroxy benzoate (DHPB). On ne sortirait pas du cadre de l'invention en utilisant un mélange de plusieurs plastifiants.

Le modifiant souple peut être une chaîne de polyoléfine ayant des greffons polyamide ou oligomères de polyamide ; ainsi il a des affinités avec les polyoléfines et les polyamides.

Le modifiant souple peut être aussi un copolymère d'éthylène ayant des motifs anhydride maléique ; ainsi il a des affinités avec les polyéthylènes et peut réagir avec les polyamides.

A titre d'exemple de modifiant souple on peut citer les polyoléfines fonctionnalisées, les polyesters aliphatiques greffés, les polymères à blocs polyéther et blocs polyamide éventuellement greffés, les copolymères de l'éthylène et d'un (méth)acrylate d'alkyle et/ou d'un ester vinylique d'acide carboxylique saturé. Les copolymères à blocs polyéther et blocs polyamide peuvent être choisis parmi ceux qu'on a cités plus haut à titre de polyamide. Ils peuvent être utilisés au titre des polyamides A1 et A2 et aussi comme modifiant souple. Dans ce dernier cas on choisi plutôt des copolymères souples c'est à dire ayant un module de flexion entre 10 et 200 MPa.

Le modifiant souple peut être aussi un copolymère à blocs ayant au moins un bloc compatible avec (A1) et au moins un bloc compatible avec (A2).

La polyoléfine fonctionnalisée est un polymère comprenant des motifs alpha oléfine et des motifs époxyde ou acide carboxylique ou anhydride d'acide carboxylique.

A titre d'exemple, on peut citer les polyoléfines ou encore les polymères blocs SBS, SIS, SEBS, EPR (appelé aussi EPM) ou EPDM greffés par des époxydes insaturés tels que le (méth.)acrylate de glycidyle, ou par des acides carboxyliques tels que l'acide (méth.)acrylique ou encore par des anhydrides d'acides carboxyliques insaturés tels que l'anhydride maléique. EPR désigne les élastomères éthylène-polypropylène et EPDM les élastomères éthylène-polypropylène-diène. On entend par polyoléfine un polymère comprenant des motifs oléfines tels que par exemple des motifs éthylène, propylène, butène-1, ou tout autre alpha oléfine. A titre d'exemple, on peut citer :
- les polyéthylènes tels que les LDPE, HDPE, LLDPE ou VLDPE, le polypropylène, les copolymères éthylène / propylène, ou encore les PE métallocènes ;
- les copolymères de l'éthylène avec au moins un produit choisi parmi les sels ou les esters d'acides carboxyliques insaturés, ou les esters vinyliques d'acides carboxyliques saturés.

Avantageusement, la polyoléfine est choisie parmi le LLDPE, le VLDPE, le polypropylène, les copolymères éthylène / acétate de vinyle ou les copolymères éthylène / (méth.)acrylate d'alkyle. La densité peut être avantageusement comprise entre 0,86 et 0,965, le Melt Flow Index (MFI) peut être compris entre 0,3 et 40.

A titre d'exemple de modifiant souple on peut encore citer :
- les copolymères de l'éthylène, d'un époxyde insaturé et éventuellement d'un ester ou un sel d'acide carboxylique insaturé ou d'un ester vinylique d'acide carboxylique saturé. Ce sont par exemple les copolymères éthylène / acétate de vinyle / (méth)acrylate de glycidyle ou les copolymères éthylène / (méth)acrylate d'alkyle / (méth)acrylate de glycidyle.
- les copolymères de l'éthylène d'un anhydride d'acide carboxylique insaturé et/ou d'un acide carboxylique insaturé pouvant être partiellement neutralisé par un métal (Zn) ou un alcalin (Li) et éventuellement d'un ester d'acide carboxylique insaturé ou d'un ester vinylique d'acide carboxylique saturé. Ce sont par exemple les copolymères éthylène / acétate de vinyle / anhydride maléique ou les copolymères éthylène / (méth)acrylate d'alkyle / anhydride maléique ou encore les copolymères éthylène / (méth)acrylate de Zn ou Li / anhydride maléique.
- le polyéthylène, le polypropylène, les copolymères éthylène propylène greffés ou copolymérisés avec un anhydride d'acide carboxylique insaturé puis condensés avec un polyamide (ou un oligomère de polyamide) monoaminé. Ces produits sont décrits dans EP 342 066.

Avantageusement, la polyoléfine fonctionnalisée est choisie parmi les copolymères éthylène / (méth.)acrylate d'alkyle / anhydride maléique, les copolymères éthylène / acétate de vinyle / anhydride maléique, les copolymères éthylène propylène majoritaires en propylène greffés par de l'anhydride maléique puis condensés avec du polyamide 6 monoaminé ou des oligomères mono aminés du caprolactame.

De préférence, c'est un copolymère éthylène / (méth.)acrylate d'alkyle / anhydride maléique comprenant jusqu'à 40% en poids de (méth.)acrylate d'alkyle et jusqu'à 10% en poids d'anhydride maléique. Le (méth.)acrylate d'alkyle peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.

A titre de polyesters aliphatiques greffés on peut citer la polycaprolactone greffée par de l'anhydride maléique, du méthacrylate de glycidyle, des esters vinyliques ou du styrène. Ces produits sont décrits dans la demande EP 711 791 dont le contenu est incorporé dans la présente demande.

Des compositions avantageuses comprennent 6 % à 36 % de polyamide (A2) catalysé, 2 % à 8 % de plastifiant, jusqu' à 20 % de modifiant souple, le complément en polyamide (A1). Avantageusement le modifiant souple est choisi parmi les copolymères éthylene-polypropylène (EPR et EPDM), greffés par l'anhydride maleique, les copolymères éthylène-(meth)acrylate d'alkyle-anhydride maleique, ces derniers copolymères mélangés avec des copolymères de l'éthylène et d'un (meth)acrylate d'alkyle, les copolymères éthylène-(meth)acrylate d'alkyle-anhydride maleique mélangés avec (i) des copolymères éthylène-(meth)acrylate d'alkyle-methacrylate de glycidyle et (ii) des copolymères éthylène-(meth)acrylate d'alkyle-acide acrylique ces trois derniers étant réticulés. Ces copolymères éthylène-(meth)acrylate d'alkyle-anhydride maleique, éthylène-(meth)acrylate d'alkyle-methacrylate de glycidyle et éthylène-(meth)acrylate d'alkyle-acide acrylique peuvent contenir jusqu'à 40 % en poids d'acrylate et 10 % en poids soit d'anhydride soit d'époxyde soit d'acide. Le MFI (melt flow index ou indice de fluidité à l'état fondu) est compris entre 2 et 50 g/10 mn , mesuré à 190°C sous 2,16 kg.

Avantageusement le modifiant souple a un module de flexion inférieur à 200 MPa et de préférence compris entre 10 et 200.

On ne sortirait pas du cadre de l'invention en utilisant un mélange de plusieurs modifiants souples ni en utilisant un modifiant souple tel que cité plus haut en mélange avec un autre polymère tel que ceux décrits comme modifiant souple mais n'ayant pas de fonction époxyde acide ou anhydride d'acide carboxylique.

Les compositions selon l'invention peuvent renfermer en outre au moins un additif choisi parmi :
- les colorants ;
- les pigments ;
- les azurants ;
- les anti-oxydants ;
- les stabilisateurs UV .

### EXEMPLES

On a utilisé les produits suivants:
- PA 12 : un polyamide 12 de Mw 45 000 à 55 000.
- PA 11 catalysé : un polyamide 11 de Mw 45 000 à 55 000.
- Lotader ^{™}: un copolymère éthylène/acrylate de butyle/anhydride maléique de proportions en poids 81/18/1 de MFI à 190°C sous 2,16 kg compris entre 3 à 10 qui est un copolymère statistique obtenu par catalyse radicalaire haute pression.
- Lotader AX ^{™} : un copolymère ethylène-acrylate de méthyle-méthacrylate de glycidyle de proportions en poids 66/24/10 de MFI à 190°C sous 2,16 kg compris entre 3 à 10
- Lotryl ^{™} un copolymère éthylène/acrylate de butyle de proportions en poids 70/30 et de MFI à 190°C sous 2,16 kg compris entre 0.1 à 0.5.
- EPRm : un copolymère éthylène-polypropylène maleisé (EXXELOR ^{™}VA 1801 fourni par EXXON)
   Lucalen ^{™} un copolymère ethylène-acrylate de butyle-acide acrylique de proportions en poids 88/8/4 de MFI à 190°C sous 2,16 kg compris entre 0,1 à 0,5.

Le plastifiant utilisé est le BBSA.

La pression d'éclatement est mesurée selon DIN 73378 et exprimée en MPa.

Le choc Charpy entaillé à -40°C (ISO 179/93) est exprimé en kJ /m2.

Le module de flexion (ISO 178) est exprimé en MPa.

L'extrudabilité est la précision du calibrage (ou la tolérance) sur le diamètre extérieur d'un tube de 8 mm et d'épaisseur 1 mm et est exprimée en centièmes de mm, ceci lorsque l'on met en oeuvre le produit.

Le vieillissement est exprimé en heures et correspond au temps au bout duquel l'allongement à la rupture est reduit de moitié, il est mesuré sur des eprouvettes d'épaisseur 2 mm pour l'air et sur des tubes pour le gasoil.

Dans les exemples le polyamide (A1) est du polyamide 12, le plastifiant du BBSA, le modifiant choc du Lotader sauf indication contraire dans les tableaux.

On a représenté sur les figures 1,2 et 3 la résistance au choc, l'éclatement et l'extrudabilité à partir des valeurs des tableaux. Dans les tableaux les proportions sont en poids.

Notre critère de comparaison est de choisir des produits de même souplesse car la souplesse (et la viscosité) caractérisent fondamentalement une gamme de produit.

**TABLEAU 1**

| Ex | Modifiant choc | PA11 catalysé | plastifiant | viscosité inhérente | Choc à moins 40°C | Eclatement | Extrudabilité | Module de flexion | |
|---|---|---|---|---|---|---|---|---|---|
| 1 | 0 | 0 | oui (12%) | 1,28 | 3,3 | 26,4 | 7 | 350+/-50 | série PA12 plastifié |
| 2 | 0 | 0 | oui (12%) | 1,61 | 3,5 | 25,4 | 4 | 350+/-50 | |
| 3 | 0 | 0 | oui (12%) | 1,68 | 3,2 | 25,5 | 3.5 | 350+/-50 | |
| 4 | 0 | 0 | oui (12%) | 1,64 | 3,4 | 25,4 | 5 | 350+/-50 | |
| 5 | 0 | 0 | oui (12%) | 1,71 | 3,3 | 25,4 | 4 | 350+/-50 | |
| 6 | 0 | 0 | oui (12%) | 1,78 | 3,8 | 24,4 | | 350+/-50 | |
| | | | | | | | | | |
| 7 | 0 | 24% | oui (8%) | 1,44 | 4,3 | 26,3 | 3 | 350+/-50 | série PA12+PA11catalysé+ plastifiant |
| 8 | 0 | 24% | oui (8%) | 1,53 | 6,4 | 24 | 2,2 | 350+/-50 | |
| 9 | 0 | 24% | oui (8%) | 1,61 | 6,5 | 23,7 | | 350+/-50 | |
| 10 | 0 | 24% | oui (8%) | 1,69 | 7,8 | 23,7 | 1,9 | 350+/-50 | |
| | | | | | | | | | |
| 11 | oui(6%) | 24% | oui(4.5%) | 1,42 | 6,2 | | 3 | 350+/-50 | série PA12 +Lotader+PA11catalysé+plastifiant |
| 12 | oui (6%) | 24% | oui (4.5%) | 1,57 | 7.6 | | 2.8 | 350+/-50 | |
| 13 | oui (6%) | 24% | oui (4.5%) | 1,60 | 9,2 | | | 350+/-50 | |
| 14 | oui (6%) | 24% | oui (4.5%) | 1,70 | 11,2 | | 1,7 | 350+/-50 | |
| 14b | oui (6%) | 24% | oui (4.5%) | 1,72 | 11,5 | | 1,T | 350+/-50 | |
| 14c | oui (6%) | 24% | oui (4.5%) | 1,81 | 13 | | 1,5 | 350+/-50 | |

| | | | | | | | | | |
|---|---|---|---|---|---|---|---|---|---|
| * Propriétés mécaniques déterminées sur spécimen conditionné 15 jours à 50% d'humidité relative | | | | | | | | | |

**TABLEAU 2**

| Ex | Modifiant choc | PA11 catalysé | plastifiant | viscosité Inhérente | Choc à moins 40°C | Eclatement | Extrudabilité | Module de flexion | |
|---|---|---|---|---|---|---|---|---|---|
| 15 | oui (6%) | 12% | oui (6.3%) | 1,42 | 4,1 | 23,8 | 2,8 | 350+/-50 | autre série PA12 +Lotader +PA11catlysé + plastifiant |
| 16 | oui (6%) | 12% | oui (6.3%) | 1,56 | 6,3 | 25,3 | 2,2 | 350+/-50 | |
| 17 | oui (6%) | 12% | oui (6.3%) | 1,62 | 5,7 | 26,1 | 1,8 | 350+/-50 | |
| 18 | oui (6%) | 12% | oui (6.3%) | 1,76 | 5,8 | 26,2 | 1,3 | 350+/-50 | |
| 18b | oui (6%) | 12% | oui (6.3%) | 1,61 | 5,5 | | 1,7 | 350+/-50 | modifiant = mélange 50/50 Latader+Lotyl |
| 18c | oui (6%) | 12% | oui (6.3%) | 1,6 | 5,4 | | 2 | 350+/-50 | modifiant = EPRm |
| 18d | oui (6%) | 12% | oui (6.3%) | 1,61 | 5,5 | | 1,7 | 350+/-50 | modifiant = mélange 50/50 EPRm+lotader |
| 19 | oui (6%) | 12% | oui (6.3%) | 1,76 | 5,8 | 26,6 | | 350+/-50 | |
| 20 | oui (6%) | 12% | oui (6.3%) | 1,81 | 6,3 | | | 350+/-50 | |
| 21 | oui (6%) | 12% | oui (6.3%) | 1.61 | 5,8 | | | 350+/-50 | |
| 22 | oui (6%) | 12% | oui (6.3%) | 1,71 | 7,3 | | 1,3 | 350+/-50 | |
| 23 | oui (6%) | 12% | oui (6.3%) | 1,90 | | 28.3 | | 350+/-50 | |
| | | | | | | | | | |
| 24 | oui (6%) | 18% | oui (5.4%) | 1,66 | 8,6 | | 1,5 | 350+/-50 | autre serie PA12 +Lotader+PA11catalysé+plastifiant |
| 25 | oui (6%) | 18% | oui (5.4%) | 1,60 | 7,9 | | 1,8 | 350+/-50 | Modif.= Lucaten = E/BA/AA (acid acrytique) |
| 26 | oui (6%) | 18% | oui (5.4%) | 1,66 | 7,9 | | 2,2 | 350+/-50 | Modif.= mélange Lucalen/Lotader 33/67 |
| 27 | oui (6%) | 18% | oui (5.4%) | ils | 7,9 | | 1,8 | 350+/-50 | Modif= Lotader RETICULE |

| | | | | | | | | | |
|---|---|---|---|---|---|---|---|---|---|
| *Propriétés mécaniques déterminées sur spécimen conditionné 15 jours à 50% d'humidité relative | | | | | | | | | |

**TABLEAU 3**

| | | | | | | | Vieillissement | | | |
|---|---|---|---|---|---|---|---|---|---|---|
| Ex | PA12 | Modifiant | PA11 cata | plastifiant | rata | Visco. inh. | Air 140°C | Gasoil / diester / eau 110°C | Module de flexion | |
| 1 | oui | 0 | 0 | 0 | 0 | 1.65 | 650 | | 1100+/-150 | PA12 |
| 2 | oui | 0 | 0 | oui (12%) | 0 | 1.61 | 775 | 2200 | 350+1-50 | PA12 + plastifiant |
| 3 | oui | oui (6%) | 0 | oui (8%) | 0 | 1.76 | 775 | 2200 | 350+/-50 | PA12 + Lotader + plastifiant |
| 4 | 0 | 0 | oui | oui (12%) | 500 ppm | 1.85 | 725 | 2000 | 350+/-50 | PA11 catalysé +plastifiant |
| | | | | | | | | | | |
| 5 | oui | oui (6%) | 12% | oui (6.3%) | 100 ppm | 1.76 | 1100 | | 350+/-50 | PA12 + PA11 catalysé + Lotader + pₗasiflanl |
| 6 | oui | oui (6%) | 12% | oui (6.3%) | 500 ppm | 1.61 | 850 | 3100 | 350+/-50 | " |
| 7 | oui | oui (6%) | 24% | oui (4.5%) | 200 ppm | 1.67 | 1000 | | 350+/-50 | " |

| | | | | | | | | | | |
|---|---|---|---|---|---|---|---|---|---|---|
| * Propriétés mécaniques déterminées sur spécimen conditionne 15 jours à 50% d'humidité relative Les compositions contiennent les stabilisants habituels des thermoplastiques (antioxydants, anti U.V. etc..) | | | | | | | | | | |

## Revendications

1. Compositions thermoplastiques comprenant en poids :
50 à 99 % d'un polyamide (A1),
1 à 50 % d'un polyamide (A2) contenant un catalyseur de polycondensation étant de l'acide phosphorique,
0 à 40% d'un plastifiant,
0 à 60%, préférentiellement 0 à 30 % d'un modifiant souple,
le total étant 100 %,
la quantité de catalyseur étant comprise entre 5 ppm et 15000 ppm d'acide phosphorique par rapport à la résine (A2),
la composition comprenant un plastifiant et un modifiant souple.

2. Compositions selon la revendication 1 dans lesquelles (A1) est le polyamide 12 et (A2) le polyamide 11.

3. Compositions selon l'une quelconque des revendications précédentes dans lesquelles le modifiant souple est choisi parmi les copolymères ethylene-polypropylène (EPR), EPDM greffés par l'anhydride maleique, les copolymères éthylène-(meth)acrylate d'alkyle-anhydride maleique, ces derniers copolymères mélangés avec des copolymères de l'éthylène et d'un (meth)acrylate d'alkyle, les copolymères éthylène-(meth)acrylate d'alkyle-anhydride maleique mélangés avec (i) des copolymères éthylène-(meth)acrylate d'alkyle-methacrylate de glycidyle et (ii) des copolymères éthylène-(meth)acrylate d'alkyle-acide acrylique ces trois derniers étant réticulés.

4. Compositions selon l'une quelconque des revendications précédentes comprenant 6 à 36 % de polyamide (A2) catalysé, 3 à 8 % de plastifiant, 0 à 20 % de modifiant souple, le complément en polyamide (A1).

## Claims

1. Thermoplastic compositions comprising, by weight:
50 to 99% of a polyamide (A1),
1 to 50% of a polyamide (A2) comprising a polycondensation catalyst, being phosphoric acid,
0 to 40% of a plasticizer,
0 to 60%, preferably 0 to 30%, of a flexible modifier, the total being 100%,
the composition comprising a plasticizer and a flexible modifier,
the amount of catalyst being between 5 ppm and 15 000 ppm of phosphoric acid with respect to the resin (A2).

2. Compositions according to Claim 1, in which (A1) is polyamide-12 and (A2) is polyamide-11.

3. Compositions according to any one of the preceding claims, in which the impact modifier is chosen from ethylene-polypropylene (EPR), EPDM copolymers grafted with maleic anhydride, ethylene-alkyl(meth)acrylate-maleic anhydride copolymers, the latter copolymers mixed with copolymers of ethylene and of an alkyl(meth)acrylate, or ethylene-alkyl(meth)acrylate-maleic anhydride copolymers mixed with (i) ethylene-alkyl(meth)acrylate-glycidyl methacrylate copolymers and (ii) ethylene-alkyl(meth)acrylate-acrylic acid copolymers, the latter three being crosslinked.

4. Compositions according to any one of the preceding claims, comprising 6 to 36% of catalysed polyamide (A2), 3 to 8% of plasticizer, 0 to 20% of flexible modifier and the remainder polyamide (A1).

## Patentansprüche

1. Thermoplastische Zusammensetzungen, enthaltend, bezogen auf das Gewicht:
50 bis 99% eines Polyamids (A1),
1 bis 50% eines Polyamids (A2), das einen Polykondensationskatalysator enthält, bei dem es sich um Phosphorsäure handelt,
0 bis 40% eines Weichmachers,
0 bis 60%, vorzugsweise 0 bis 30%, eines flexiblen Modifizierungsmittels,
wobei sich die Summe auf 100% beläuft,
wobei die Katalysatormenge zwischen 5 ppm und 15000 ppm Phosphorsäure, bezogen auf das Harz (A2), liegt,
und wobei die Zusammensetzung ein Weichmacher und ein flexibles Modifizierungsmittel enthält.

2. Zusammensetzungen nach Anspruch 1, in denen es sich bei (A1) um Polyamid-12 und bei (A2) um Polyamid-11 handelt.

3. Zusammensetzungen nach einem der vorhergehenden Ansprüche, in denen das flexible Modifizierungsmittel ausgewählt ist aus Ethylen-Polypropylen-Copolymeren (EPR), mit Maleinsäureanhydrid gepfropften EPDM-Copolymeren, Ethylen-Alkyl(meth)acrylat-Maleinsäureanhydrid-Copolymeren, diesen letztenCopolymeren in Abmischung mit Copolymeren von Ethylen und einem Alkyl(meth)acrylat, und Ethylen-Alkyl(meth)acrylat-Maleinsäureanhydrid-Copolymeren in Abmischung mit (i) Ethylen-Alkyl(meth)acrylat-Glycidylmethacrylat-Copolymeren und (ii) Ethylen-Alkyl(meth)acrylat-Acrylsäure-Copolymeren, wobei die drei letzten vernetzt sind.

4. Zusammensetzungen nach einem der vorhergehenden Ansprüche, enthaltend 6 bis 36% katalysiertes Polyamid (A2), 3 bis 8% Weichmacher, 0 bis 20% flexibles Modifizierungsmittel, Rest Polyamid (A1).
